# EUROPÄISCHE PATENTSCHRIFT

(11) **EP 2 847 108 B1**
(45) Veröffentlichungstag und Bekanntmachung des Hinweises auf die Patenterteilung: **28.02.2018**
(21) Anmeldenummer: 13720913.6
(22) Anmeldetag: 02.05.2013
(51) Int. Cl.: B65G 15/42

(54) **FÖRDERANLAGE MIT VERBESSERTEM ENERGIEBEDARF**
CONVEYING INSTALLATION WITH IMPROVED ENERGY REQUIREMENTS
INSTALLATION DE TRANSPORT À CONSOMMATION D'ÉNERGIE AMÉLIORÉE

(30) Priorität: 07.05.2012 DE 102012103963
(43) Veröffentlichungstag der Anmeldung: 18.03.2015
(73) Patentinhaber: ContiTech Transportbandsysteme GmbH, 30165 Hannover (DE)
(72) Erfinder: KANTOREK, Frank, 31275 Lehrte (DE); THOMCZYK, Andrea, 37079 Göttingen (DE)
(74) Vertreter: Preusser, Andrea
(86) Internationale Anmeldenummer: PCT/EP2013/059096
(87) Internationale Veröffentlichungsnummer: WO 2013/167449

(56) Entgegenhaltungen:
- CA-A1- 2 251 005
- DE-B- 1 182 143
- FR-A- 1 070 222
- GB-A- 1 541 722
- JP-A- 2004 231 405
- JP-A- 2008 156 008
- US-A- 3 319 776
- US-A- 4 410 082
- US-A1- 2006 237 378

## Beschreibung

Die Erfindung betrifft eine Förderanlage mit einem Fördergurt, umfassend wenigstens eine Seitenwand aufgebaut aus jeweils mindestens einem polymeren Werkstoff mit elastischen Eigenschaften und / oder wenigstens einen Stollen aufgebaut aus jeweils mindestens einem polymeren Werkstoff mit elastischen Eigenschaften, sowie ferner mit Trommeln, Tragrollen und mit Traggerüsten, wobei die Förderanlage ein materialförderndes Obertrum mit einer Aufgabestelle für das Fördermaterial und ein zumeist materialfreies Untertrum ausbildet. Es gibt allerdings auch Förderanlagen, die zusätzlich im Untertrum beladen werden.

Förderanlagen mit endlos geschlossenen Fördergurten sind hinreichend bekannt. Fördergurte, oft auch als Förderbänder bezeichnet, verfügen zum Transport von schuttfähigen Gütern entweder über eine muldenförmige Ausführung, wie bspw. aus DE 10 2008 037 457 A1 oder DE 7019776 bekannt, oder über eine rechts- und linksseitige Seitenwand (Randprofilleiste), die im Wesentlichen senkrecht auf der Tragseite des Fördergurtes befestigt sind, wie bspw. aus DE 10 2008 013 571 A1 bekannt, und / oder über so genannte Stollen (Stege), wie bspw. aus DE19528205C2 oder DE 3835619C2 bekannt.

Die Seitenwände eines Fördergurtes sind oft als Wellkante bzw. Wellenkante ausgebildet, siehe beispielsweise in DE 10 2008 055 462 A1 beschrieben. Dadurch ist gewährleistet, dass trotz der oft relativ hohen Seitenwände der Fördergurt an den beiden Endpunkten der Transportstrecke schadlos um die dort befindliche Umlenktrommel geführt werden kann. Die Seitenwände sind in diesem Fall nicht langgestreckt und plan, sondern in gewellter (welliger, schlangenlinienförmiger) Form ausgebildet und an dem Fördergurt an seinen Längsseiten befestigt. Hierdurch ist genügend Seitenwandmaterial vorhanden, um ein Reißen bedingt durch die Seitenwandstreckung bei der Umlenkung zu vermeiden. Sie bestehen zumeist aus einer elastischen Vollgummischicht mit und ohne Gewebeeinlagen. Fördergurte mit Wellkanten werden bevorzugt zum Transport von Schüttgütern verwendet. Insbesondere bei Steigförderern verhindern Stollen, vorzugsweise Querstollen, das Rutschen des Fördergutes. Bei geraden Fördergurten werden die Stollen auch als Trennung von Stückgütern verwendet. Die Stollen können hierbei mit oder ohne zusätzliche Gewebeeinlage ausgestattet sein.

Durch die Wellkanten wird der nutzbare Materialquerschnitt (d.h. die Füllquerschnittsfläche und damit das Fördervolumen) des Fördergurtes vergrößert. Wellkanten und Stollen, jeweils mit und ohne Fuß, werden zumeist auf den Fördergurt geklebt, geschweißt oder vulkanisiert. Die Stollen werden bevorzugt quer zur Förderrichtung aufgebracht.

Fördergurte mit Wellkanten und / oder Stollen sind besonders gut geeignet, um Stück- und Schuttgut steil (bis zu 90°) befördern zu können, da hierbei entweder eine gute seitliche Abdichtung gewährleistet ist und das Fördergut nicht seitlich bzw. nach unten abrutschen kann.

Der Materialaufwand insbesondere für die Wellkanten ist bedingt durch die Wellgeometrie vergleichsweise hoch. Dieser hohe Materialaufwand führt auch zu einem hohen Gesamtgewicht des Fördergurtes.

Ebenso erhöht das Aufbringen von Stollen das Gesamtgewicht des Fördergurtes. FR 1.070.222 beschreibt eine Förderanlage nach dem Oberbegriff des Anspruchs 1. Die Aufgabe der Erfindung darin, eine Förderanlage bereitzustellen, deren Fördergurt sich durch eine weitere Reduzierung des Gesamtgewichtes und dadurch bedingt durch eine weitere Kostenoptimierung und erniedrigten Energieverbrauch im Betrieb der Förderanlage auszeichnet.

Gelöst wird diese Aufgabe durch eine Förderanlage nach dem Anspruch 1. Es wurde festgestellt, dass sich das Gesamtgewicht des Fördergurtes deutlich reduzieren lässt, wenn wenigstens eine Seitenwand und / oder wenigstens ein Stollen jeweils wenigstens eine geschäumte Polymermischung enthält oder besonders bevorzugt aus wenigstens einer geschäumten Polymermischung besteht. Überraschenderweise werden dadurch die weiteren Eigenschaften des Fördergurtes und damit der gesamten Förderanlage nicht weiter negativ beeinträchtigt.

Die begriffe Polymermischung und Kautschukmischung werden synonym verwendet.

Die Erfindung ist grundsätzlich für alle Förderanlagen und Fördergurte geeignet. Insbesondere bei Fördergurten mit Wellkanten oder mit vergleichsweise vielen oder großvolumigen Stollen ist aufgrund der hohen Materialmenge hierfür, eine besonders gute Gewichtsreduzierung möglich.

Erfindungswesentlich ist, dass wenigstens eine Seitenwand wenigstens eine geschäumte Polymermischung enthält und / oder dass wenigstens ein Stollen wenigstens eine geschäumte Polymermischung enthält. Dies bedeutet, dass die Seitenwand und / oder der Stollen nur aus wenigstens einer geschäumten Schicht bestehen kann. Es ist aber auch möglich, dass die Seitenwand und / oder der Stollen einen schichtförmigen Aufbau besitzt, wobei wenigstens eine Schicht aus wenigstens einer geschäumten Polymermischung besteht. In diesem Fall können die weiteren Schichten aus ungeschäumten Kautschukmischungen aufgebaut sein oder als textile Lage, z. Bsp. aus einem Gewebe, ausgebildet sein.

Der Stollen kann geometrisch bevorzugt als Standard T-Stollen, Block T-Stollen, geneigter C-Stollen, gekröpfter TC-Stollen, Keilführungsleiste oder in anderen gängigen Formen ausgebildet sein.

Ist die Seitenwand und / oder der Stollen schichtförmig aufgebaut und wenigstens eine weitere Schicht aus einer ungeschäumten Kautschukmischung vorhanden, so ist die qualitative und / oder quantitative Zusammensetzung der geschäumten Polymermischung, abgesehen von den notwendigen Blähmitteln, hierbei bevorzugt gleich oder verschieden der Zusammensetzungen der ungeschäumten Kautschukmischung(en).

Bei Vorhandensein einer textilen Lage, insbesondere in Form eines Gewebes, ist das Material bevorzugt ausgewählt aus der Gruppe, bestehend aus Baumwolle und / oder Polyamid und / oder Polyester und / oder Aramid und / oder Glas und / oder Basalt und / oder Stahl sein. Die genannten Werkstoffe können alleine oder in Form von Hybridgeweben, welche aus wenigstens einem der genannten Werkstoffe aufgebaut sind, eingesetzt werden. Von besonderer Bedeutung ist hier ein Polyamid-Polyester-Gewebe.

Der Kautschuk für die geschäumte Polymermischung ist ausgewählt aus der Gruppe, bestehend aus Naturkautschuk (NR) und / oder Butadien-Kautschuk (BR) und / oder Chloropren-Kautschuk (CR) und / oder Styrol-Butadien-Kautschuk (SBR) und / oder Nitrilkautschuk (NBR) und / oder Butylkautschuk (IIR) und / oder Ethylen-Propylen-Kautschuk (EPM) und / oder Ethylen-Propylen-Dien-Kautschuk (EPDM) und / oder Polyacrylat-Kautschuk (ACM) und / oder Polyurethan (PU) und / oder Epichlorhydrinkautschuk (ECO) und / oder chlorsulfonierter Polyethylenkautschuk (CSM) und / oder Silikonkautschuk (MVQ) und / oder Fluorkautschuk (FPM). Die genannten Kautschuke können hierbei alleine oder im Verschnitt eingesetzt werden.

Von besonderer Bedeutung ist bislang CR, das sich durch eine hohe Flamm-, Witterungs- und Alterungsbeständigkeit auszeichnet, insbesondere für Fördergurte mit Einsatz im Untertagebergbau. Im Übertagebergbau haben ferner NR sowie die oben erwähnten Verschnitte (DE 10 2009 043 904 A1) eine größere Bedeutung erlangt.

Es allerdings auch möglich, dass die Seitenwand und / oder der Stollen wenigstens einen geschäumten thermoplastischen Kautschuk, d.h. ein thermoplastisches Polymer, (TP, TPE, TPU, etc.) enthält. Dieser kann mit den oben genannten im Verschnitt eingesetzt werden. Des Weiteren kann die geschäumte Polymermischung wenigstens einen Füllstoff in den üblichen Mengen enthalten. Hierbei können alle der fachkundigen Person bekannten Füllstoffe, wie bspw. Kieselsäure, Ruß, Glimmer, Kohlenstoffnanoröhren, Silikate, Alumiumhydroxid, Talk, Kreide, etc. verwendet werden.

Ebenso können alle der fachkundigen Person bekannten weiteren Zusatzstoffe, wie Pigmente, Weichmacher, Ozon- und Alterungsschutzmittel eingesetzt werden.

Die Vulkanisation der geschäumten Schicht erfolgt in der Regel peroxidisch, z.B. wenn EPDM als Kautschukkomponente verwendet wird, oder auch als Schwefelvulkanisation bei Verwendung von NR, BR oder SBR oder auch bisphenolisch bei der Verwendung von bspw. FPM.

Zusätzlich enthält die geschäumte Polymermischung noch wenigstens ein Blähmittel. Als Blähmittel werden üblicherweise porenbildende Treibgase wie z.B. Azo- und DiazoVerbindungen, bezeichnet, die unter dem Einfluß von Wärme oder Katalysatoren Gase (z.B. N₂ oder CO₂) abspalten und daher zur Herstellung geschäumter Polymermischungen dienen. Die Blähmittel zersetzen sich hierbei bei einer bestimmten Temperatur während der Verarbeitung unter Gas-Bildung oder bei Zusatz von flüchtigen Lösemitteln während der Polymerisation bzw. Vulkanisation. Die Verschäumung erfolgt dann entweder beim Verlassen des Extrusionswerkzeugs, d.h. durch Vulkanisation in einer UHF-(Mikrowellen)-Heissluftanlage oder Spritzgießen, oder in offenen Formen.

Bevorzugt hat sich die Verwendung von Blähmitteln, und erfindungsgemäß von Blähmitteln auf Basis von wenigstens einem Acrylnitrilpolymer, erhältlich unter anderem unter dem Handelsnamen Expancel®, gezeigt.

Des Weiteren können bei Bedarf noch Schaumstabilisatoren hinzugefügt werden.

Die Seitenwände und / oder die Stollen können zudem noch weitere folgende Bauteile enthalten: Leiterschleifen, Transponder, Barcodes, eine Polymermatrix mit eingemischten detektierbaren Teilchen oder andere detektierbare Elemente.

Weitere Bauteile einer Förderanlage können sein:
- Umlenkrollen oder Umlenktrommeln
- Niederhalterollen bei Rohrfördergurtanlagen
- Korrekturrollen, insbesondere bei Rohrfördergurtanlagen
- Schurren an der Aufgabestelle für das Fördermaterial
- Überwachungseinrichtungen

Die Erfindung wird nun anhand eines Ausführungsbeispiels unter Bezugnahme auf schematische Zeichnungen erläutert. Die Erfindung ist nicht auf die gezeigten Zeichnungen beschränkt.

Es zeigen:
- Fig. 1: eine Förderanlage mit einem Fördergurt, einer Trommel und Tragrollen;
- Fig. 2: Wellenkante
- Fig. 3: a) bis d) verschiedene Stollenformen

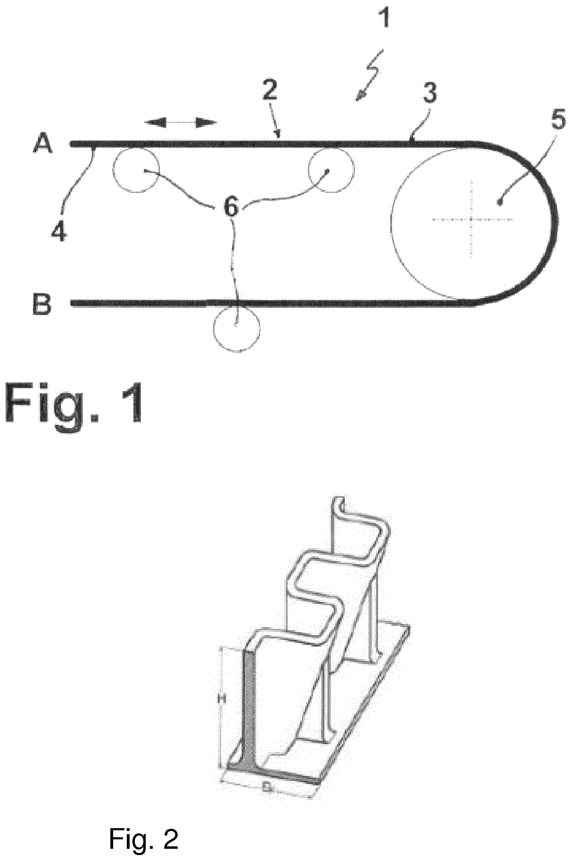

Fig. 1 zeigt eine Förderanlage 1 mit einem Fördergurt 2, umfassend eine tragseitige Deckplatte 3 für das Fördermaterial und eine laufseitige Deckplatte 4 aus jeweils einem polymeren Werkstoff mit elastischen Eigenschaften, beispielsweise aus einer vulkanisierten Kautschukmischung auf der Basis von CR, sowie mit einem eingebetteten Zugträger, beispielsweise in Form von Stahlseilen. Die laufseitige Deckplatte 4 hat Kontakt mit einer Trommel 5, die die Antriebstrommel oder Umkehrtrommel sein kann, und stützt sich zudem innerhalb des Obertrums A und Untertrums B an Tragrollen 6 in Form eines Tragrollensystems ab. Die Laufrichtung des Fördergurtes 2 ist durch die Pfeilrichtung dargestellt.

Fig. 2 zeigt einen Querschnitt durch eine Wellenkante, die wenigstens eine geschäumte Polymermischung enthält.

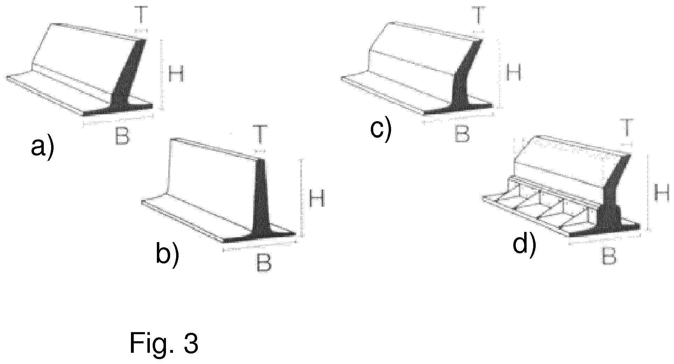

Fig. 3a) zeigt einen geneigten C Stollen mit zu definierender Breite B, Höhe H und Tiefe T

Fig. 3b) zeigt einen Standard T Stollen mit zu definierender Breite B, Höhe H und Tiefe T

Fig. 3a) und 3b) zeigen gekröpfte TC Stollen mit zu definierender Breite B, Höhe H und Tiefe T

### Bezugszeichenliste

### (Teil der Beschreibung)

- 1: Förderanlage
- 2: Fördergurt
- 3: tragseitige Deckplatte
- 4: laufseitige Deckplatte
- 5: Trommel (Antriebstrommel, Umkehrtrommel)
- 6: Tragrollen
- A: Obertrum
- B: Untertrum
- H: Höhe der Wellenkante
- D: Durchmesser der Wellenkante

## Patentansprüche

1. Förderanlage (1) mit einem Fördergurt (2), umfassend wenigstens eine Seitenwand aufgebaut aus jeweils einem polymeren Werkstoff mit elastischen Eigenschaften und oder wenigstens einen Stollen aufgebaut aus jeweils einem polymeren Werkstoff mit elastischen Eigenschaften, sowie ferner mit Trommeln (5), Tragrollen (6) und mit Traggerüsten, wobei die Förderanlage ein materialförderndes Obertrum (A) mit einer Aufgabestelle für das Fördermaterial und ein zumeist materialfreies Untertrum (B) ausbildet, wobei wenigstens eine Seitenwand und / oder wenigstens ein Stollen des Fördergurtes wenigstens eine geschäumte Polymermischung enthält, **dadurch gekennzeichnet, dass** der Kautschuk für die geschäumte Polymermischung ausgewählt ist aus der Gruppe, bestehend aus Naturkautschuk (NR) und / oder Chloropren-Kautschuk (CR) und / oder Styrol-Butadien-Kautschuk (SBR) und / oder Butylkautschuk (IIR) und / oder Ethylen-Propylen-Kautschuk (EPM) und / oder Ethylen-Propylen-Dien-Kautschuk (EPDM) und dass die geschäumte Polymermischung ein Blähmittel auf Basis von wenigstens einem Acrylnitrilpolymer enthält.

2. Förderanlage nach Anspruch 1, **dadurch gekennzeichnet, dass** die Seitenwand als Wellenkante ausgebildet ist.

## Claims

1. Conveying installation (1) having a conveying belt (2) comprising at least one side wall constructed from in each case one polymeric material with elastic properties and/or from at least one cleat constructed from in each case one polymeric material with elastic properties, and also, furthermore, having drums (5), carrying rollers (6) and having carrying structures, the conveying installation forming a materials-conveying upper strand (A) with a charging location for the conveyed materials, and a usually materials-free lower strand (B), at least one side wall and/or at least one cleat of the conveying belt comprising at least one foamed polymer mixture, **characterized in that** the rubber for the foamed polymer mixture is selected from the group consisting of natural rubber (NR) and/or chloroprene rubber (CR) and/or styrenebutadiene rubber (SBR) and/or butyl rubber (IIR) and/or ethylene-propylene rubber (EPM) and/or ethylene-propylene-diene rubber (EPDM) and **in that** the foamed polymer mixture comprises an expandant based on at least one acrylonitrile polymer.

2. Conveying installation according to Claim 1, **characterized in that** the side wall is in the form of an undulating edge.

## Revendications

1. Installation de transport (1) munie d'une bande de transport (2), comprenant au moins une paroi latérale formée respectivement par un matériau polymère à propriétés élastiques et/ou au moins un tasseau formé respectivement par un matériau polymère à propriétés élastiques, et comprenant également des tambours (5), des rouleaux-porteurs (6) et des armatures, l'installation de transport étant formée par un brin supérieur (A) assurant le transport du matériau et doté d'un point de chargement pour le matériau à transporter, et par un brin inférieur (B) essentiellement dépourvu de matériau, au moins une paroi latérale et/ou au moins un tasseau de la bande de transport contenant au moins un mélange de polymères expansé, **caractérisée en ce que** le caoutchouc pour le mélange de polymères expansé est choisi dans le groupe constitué par le caoutchouc naturel (NR) et/ou le caoutchouc de chloroprène (CR) et/ou le caoutchouc de styrène-butadiène (SBR) et/ou le caoutchouc de butyle (IIR) et/ou le caoutchouc d'éthylène-propylène (EPM) et/ou le caoutchouc d'éthylène-propylène-diène (EPDM), et **en ce que** le mélange de polymères expansé contient un agent gonflant à base d'au moins un polymère d'acrylonitrile.

2. Installation de transport selon la revendication 1, **caractérisée en ce que** la paroi latérale est configurée sous la forme d'un bord ondulé.
